# EUROPEAN PATENT APPLICATION

(11) **EP 2 704 035 A1**
(43) Date of publication of application: **05.03.2014**
(21) Application number: 13180574.9
(22) Date of filing: 15.08.2013
(51) Int. Cl.: G06F 17/30

(54) **Storage and retrieval of sensor data and computed parameters for use in condition based maintenance systems**

(30) Priority: 28.08.2012 US 201261693931 P; 13.09.2012 US 201213612942
(71) Applicant: GE Aviation Systems LLC, Grand Rapids, MI 49512-1991 (US)
(72) Inventor: Sykes, Benjamin James, Grand Rapids, MI 49512-1991 (US)
(74) Representative: Williams, Andrew Richard

(57) **Abstract**

A system and method for storing and accessing data (15) in an embedded system (13) of an aircraft extracts (8) identifiers (9) from headers in stored data (5), and stores (11) the identifiers (9) in a separately indexable array (14).

## Description

### BACKGROUND

Embedded data systems are commonly used in avionics and elsewhere in an aircraft, such as in a flight data recorder, where massive amounts of data are stored for later retrieval. Processing the data from the large data base in a meaningful and efficient manner is typically done in a ground based system, rather than in an airborne aircraft, because of the greater processing power typically required. Nonetheless, the data base on the aircraft normally requires mapping the data to the particular storage medium so particular data can be located later during processing. It is known to use relational databases in embedded systems to enable later processing of the stored data, but relational databases often cannot run effectively on low power systems, or low memory systems, or task-specific systems such as might be found on an aircraft.

Ground based systems are often coded with the particular mapping of a particular storage medium in an aircraft that enables effective processing of data from the storage medium, but the necessary requirements for hardware, software and networking make such systems costly and cumbersome. A distributed file system such as Apache's Hadoop®, an open source framework for data-intensive applications, may provide a means to process the large data bases of an aircraft embedded system, but it does not relate well to embedded systems, nor does it address selecting an individual data sample very well.

### BRIEF DESCRIPTION

A method of storing data, in a variety of structured formats, in an indexable way on low cost and low power systems. One embodiment of the present invention includes reading data sampled from sensors or calculated data stored as an object within the embedded system; splitting identifier information from an object; indexing identifier information in association with a particular object, or portion thereof, in an index; and storing the index. Depending on the needs of the system for retrieval, the data values are stored in row or column based formats, and indexes a variety of identifiers, alert indicators, or timestamps.

### BRIEF DESCRIPTION OF THE DRAWINGS

In the drawings:
FIG. 1 is a schematic diagram illustrating one embodiment of an index according to the invention.
FIG. 2 is a schematic diagram illustrating another embodiment of an index according to the invention.
FIG. 3 is a schematic diagram depicting one embodiment of a method of storing identifiers in an index wherein the index and data objects reside on the same system.
FIG. 4 is a schematic diagram depicting another embodiment of a method of storing identifiers in an index wherein the index and data objects reside on different systems.
FIG. 5 is a block diagram of an index stored in the same system as the data objects according to one embodiment.
FIG. 6 is a block diagram of an index stored on different systems as the data objects according to another embodiment.

### DETAILED DESCRIPTION

In the following description, for the purposes of explanation, numerous specific details are set forth in order to provide a thorough understanding of the technology described herein. It will be evident to one skilled in the art, however, that the exemplary embodiments may be practiced without these specific details. In other instances, structures and devices are shown in diagram form in order to facilitate description of the exemplary embodiments.

The exemplary embodiments are described below with reference to the drawings. These drawings illustrate certain details of specific embodiments that implement the module, method, and computer program product described herein. However, the drawings should not be construed as imposing any limitations that may be present in the drawings. The method and computer program product may be provided on any machine-readable media for accomplishing their operations. The embodiments may be implemented using an existing computer processor, or by a special purpose computer processor incorporated for this or another purpose, or by a hardwired system.

As noted above, embodiments described herein include a computer program product comprising machine-readable media for carrying or having machine-executable instructions or data structures stored thereon. Such machine-readable media can be any available media, which can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium that can be used to carry or store desired program code in the form of machine-executable instructions or data structures and that can be accessed by a general purpose or special purpose computer or other machine with a processor. When information is transferred or provided over a network 18 or another communication connection (either hardwired, wireless, or a combination of hardwired or wireless) to a machine, the machine properly views the connection as a machine-readable medium. Thus, any such a connection is properly termed a machine-readable medium. Combinations of the above are also included within the scope of machine-readable media. Machine-executable instructions comprise, for example, instructions and data, which cause a general purpose computer, special purpose computer, or special purpose processing machines to perform a certain function or group of functions.

Embodiments will be described in the general context of method steps that may be implemented in one embodiment by a program product including machine-executable instructions, such as program code, for example, in the form of program modules executed by machines in networked environments. Generally, program modules include routines, programs, objects, components, data structures, etc. that have the effect of performing particular tasks or implement particular abstract data types. Machine-executable instructions, associated data structures, and program modules represent examples of program code for executing steps of the method disclosed herein. The particular sequence of such executable instructions or associated data structures represent examples of corresponding acts for implementing the functions described in such steps.

Embodiments may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the internet and may use a wide variety of different communication protocols. Those skilled in the art will appreciate that such network computing environments will typically encompass many types of computer system configuration, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communication network. In a distributed computing environment, program modules may be located in both local and remote memory storage devices.

An exemplary system for implementing the overall or portions of the exemplary embodiments might include an embedded computing device found on aircrafts in the form of a dedicated computer, including a processing unit, a system memory, and a system bus, that couples various system components including the system memory to the processing unit. The system memory may include read only memory (ROM) and random access memory (RAM). Alternatively, a system for implementing portions of the embodiments might include a general purpose computing device in the form of a computer, including a processing unit, a system memory, and a system bus, that couples various system components including the system memory to the processing unit. A system may also include a magnetic hard disk drive for reading from and writing to a magnetic hard disk, a magnetic disk drive for reading from or writing to a removable magnetic disk, and an optical disk drive for reading from or writing to a removable optical disk such as a CD-ROM or other optical media. The drives and their associated machine-readable media provide nonvolatile storage of machine-executable instructions, data structures, program modules and other data for the system.

Beneficial effects of the method disclosed in the embodiments include avoiding use of relational databases for data storage on low-powered, low-memory or task specific embedded systems. For larger computer platforms, most of the data can be stored on regular commodity data storage devices, thus reducing the storage and memory requirements for relational databases and providing an ability to off-load the data access task to other systems. Data processing can be targeted at a system that is physically close to the data store, thereby reducing network requirements. Particular advantages are found in embedded aircraft systems.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

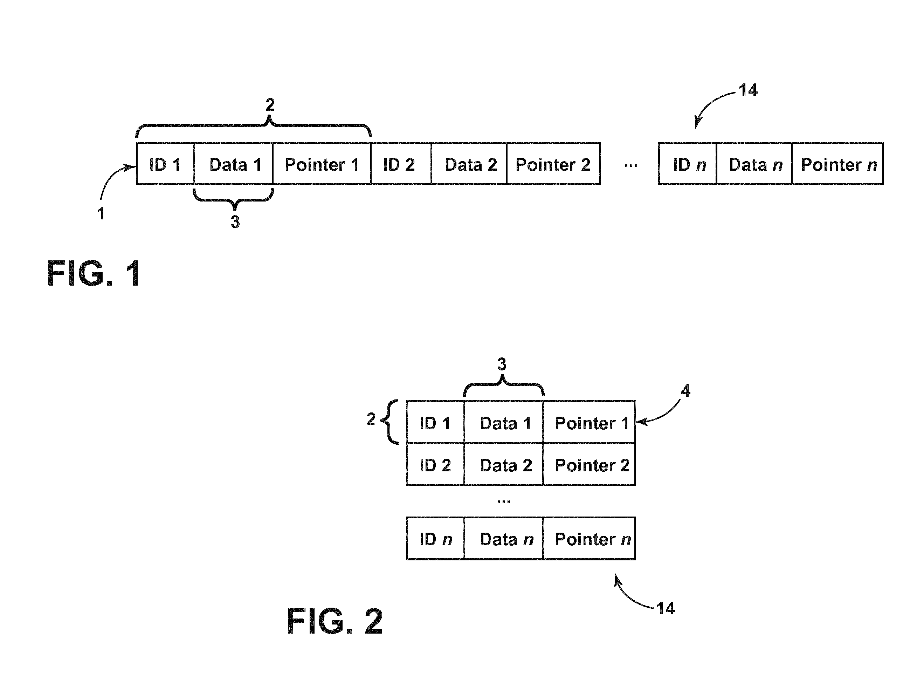

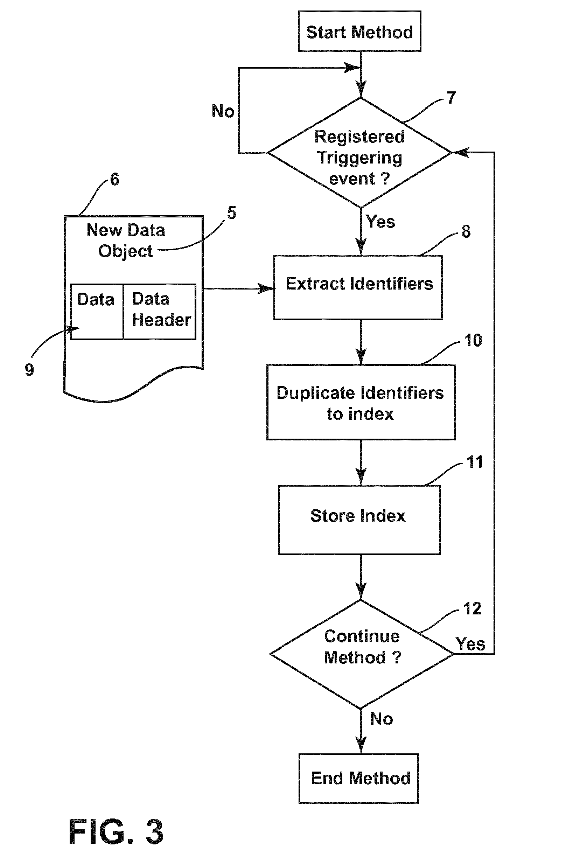

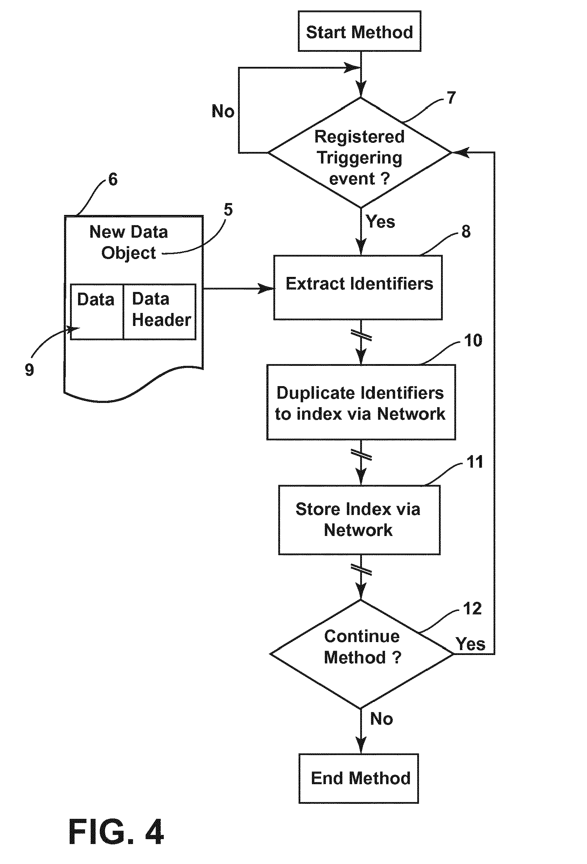

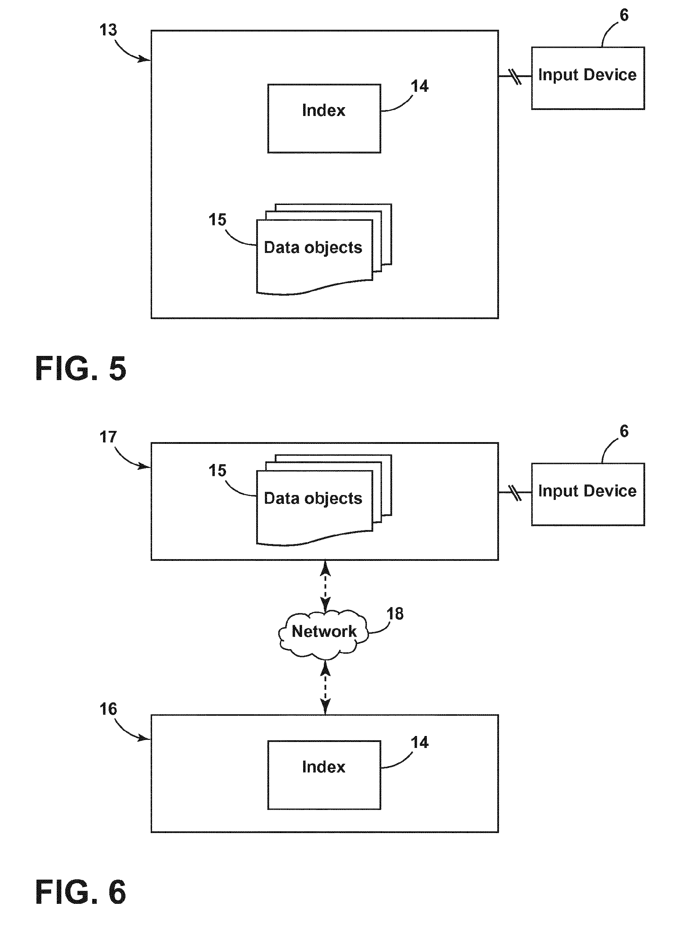

For the convenience of the reader, the discussion that follows begins with a description of an index according to the invention (FIGS. 1 and 2), then a method (FIG. 3 and FIG. 4), followed by a discussion of the operation of various components in the system (FIG. 5 and FIG. 6).

As described by FIG. 1, an index 14 used in embodiments of the system and method according to the invention contains stored identifiers 9 from data objects 5. The index 14 can be a separately stored file, apart from the objects 16. Depending on the needs for retrieval, index identifier values 3 can be stored in a row or column based array. In one example, as shown in FIG. 1, the index 14 is serialized into one or more columns 1 wherein object identifiers 2 are stored in independent arrays. In a second example, shown in FIG. 2, the index 14 is organized in a row-based structure 4 wherein each object 5 is represented by a single row, and columns are identified based on the identifiers 2 collected. In either embodiment, the arrays can be structured by an undefined size, wherein new identifier data is appended to the index 14, or by a predefined size, calculated by the number of known object 15 entries and identifiers 9 per object 5, wherein new identifier 9 data overwrites the allocated memory or media.

The index 14 is a separately indexable file. If using a file system that is capable, the index 14 is stored with a particular filename known to those skilled in the art, thus avoiding the indexing steps. For low power systems, the index 14 may be stored in the basic format described herein. For larger computing platforms, the indexes could be stored in relational databases on which queries may be performed to get a resource location of the stored data object 15.

In the first embodiment, the index 14 is stored in the same system 13 as the data objects. In the second embodiment, the index is stored in a remotely networked system 16 away from the data objects system 15. In this respect, the network 18 may be, for example, the Internet, intranets, wide area networks (WANs), local area networks, wireless networks, or other suitable networks, etc., or any combination of two or more such networks.

A method routine, show in FIG. 3, is conducted within an embedded system 13 by a controller or processor wherein the routine looks for triggering events 7 to conduct the method. These triggering events 7 may include, but are not limited to: continual query for data objects that were not present in the previous query; system-controlled alerts to new data creation; or any other indicator of new or existing data object presence in the data object storage system 13.

In an embedded system 13 of an aircraft, new data objects 5 are created from sensors, calculated data, or other processes 6. The process of how the system registers data object input 6 is controlled via known system processes. The system processes serialize the data objects 5 into a particular format for storage as defined by the system. Ideally, this particular format is based on OSACBM, in either binary or XML format, but any format may be used.

Upon a triggering event 7, system processes identify a new data object 5 and read the data and data header 9. The method extracts 8 identifiers 3 from the data and data header 9 as defined by the retrieval needs, from the local data object storage system 13. Examples of identifiers 3 include, but are not limited to: dataID, time stamp, and alert status. The method extracts 8 at least one identifier 3 for each data object 5. Each extracted identifier 3 points to a location of the associated data object in the local storage system 13.

The method then duplicates 10 said identifier or identifiers 3 to the locally stored index 14 corresponding to the defined array arrangement. The index 14 is then stored 11 in the local data storage system 13 for additional method indexing or retrieval. The method then continues to operate depending on the needs of the system for retrieval 12.

In a method routine, shown in FIG. 4, in an embedded system 17 of an aircraft, new data objects 5 are created from sensors, calculated data, or other processes 6. The process of how system registers this data object input is controlled via known system processes. The system processes serialize the data object into a particular format for storage as defined by the system 17. Ideally, this particular format is based on OSACBM, in either binary or XML format, but any format may be used.

A method routine is conducted within an embedded system 17 by a controller or processor wherein the routine looks for triggering events 7 to conduct the method. These triggering events 7 may include, but are not limited to: continual query for data objects that were not present in the previous query; system-controlled alerts to new data creation; or any other indicator of new or existing data object presence in the data object storage system.

Upon a triggering event 7 of the method routine, system processes identify the new data 5 object in the data object storage system 17 and read the data and data header 9. The method extracts 8 identifiers 3 from the data and data header 9 as defined by the retrieval needs, from the networked data object storage system 17. Examples of identifiers 3 include, but are not limited to: dataID, time stamp, and alert status. The method extracts at least one identifier 3 for each data object 5. The extracted identifier 3 points to a location of the associated data object 5 in the networked data storage system 17.

The method then connects via network 18 to the remote index storage system 16 and duplicates 10 said identifier or identifiers 3 to the networked stored index 14 corresponding to the defined array arrangement. The index 14 is then stored 11 in the remote index storage system 16 for additional method indexing or retrieval. The method then continues to operate depending on the needs of the system for retrieval 12.

With reference to FIG. 5, shown is a block diagram of an index 14 stored in the same system 13 as the data objects 15 according to the first embodiment of the present method. The environment includes, for example, an input device 6 for the new data object 5, and a system 13 including a medium holding the index 14 and data objects 15 as described above. In this respect, the input device 6 is coupled to the system 13. Alternatively, the input device 6 may be coupled to a network 18 and may communicate with the system 13, also coupled to a network 18, through the network 18. The system 13 herein may be an embedded system or an alternative system where the referenced data objects 15 and index 14 might have been transferred for processing.

With reference to FIG. 6, shown is a block diagram of an index 14 stored in a remotely networked system 16 away from the data objects 15 according to the second embodiment of the present method. The networked environment includes, for example, an input device 6 for the new data object 5, a system 16 including the remote index storage medium, and system 17 including a data object storage medium. The systems 16 and 17 herein may be embedded systems or alternative systems where the referenced data objects 15 and index 14 might have been transferred for processing. In this respect, the input device 6 might be coupled to a data object storage medium system 17. The system 17 including the data object storages 15 is coupled to a network 18. Alternatively, the input device 6 may be coupled to a network 18 and may communicate with the system 17 through the network 18. The remote index storage medium system 16 is coupled to a network 18 and may communicate with the data object storage medium system 17 though the network.

## Claims

1. A method of storing data (5) in an embedded system (13) of an aircraft, the method comprising:
serializing the data (5) into a predefined format wherein the predefined format includes a header (9) with identifiers (3) associated with objects (5) represented in the data;
storing (11) the data in a non-transitory storage medium according to the predefined format;
extracting (8) at least one identifier (3) from the header (9) for each object (5); and
allocating the at least one identifier to a separately indexable array wherein the at least one identifier points to a location of the associated object in the stored data.

2. The method of claim 1, wherein the separately indexable array comprises one of columns and rows.

3. The method of either of claim 1 or 2, wherein the separately indexable array is a relational database.

4. The method of any preceding claim, wherein the separately indexable array is stored remotely from the stored data.

5. The method of any preceding claim, wherein the separately indexable array is indexed.

6. A system for storing and accessing data in an embedded system (13) of an aircraft comprising a first non-transitory storage medium wherein data received from sensors in the aircraft are serialized and stored according to a predefined format including headers (9) with identifiers (3) associated with objects (5) represented in the data, and a second non-transitory storage medium wherein the identifiers (3) are extracted (8) from the headers (9) and stored in a separately indexable array wherein the at least one identifier points to a location of the associated object in the stored data.

7. The system of claim 6, wherein the separately indexable array comprises one of columns and rows.

8. The system of either of claim 6 or 7, wherein the separately indexable array is a relational database.

9. The system of any of claims 6 to 8, wherein the second non-transitory storage medium is remote from the first non-transitory storage medium.

10. The system of any of claims 6 to 9, wherein the separately indexable array is indexed.
